**Europäisches Patentamt**

**European Patent Office**

**Office européen des brevets**

(19)

(11) Veröffentlichungsnummer: **0 167 728**
**B1**

(12)
# EUROPÄISCHE PATENTSCHRIFT

(45) Veröffentlichungstag der Patentschrift:
**30.03.88**

(51) Int. Cl.⁴: **H 01 G 13/02**

(21) Anmeldenummer: **85104694.6**

(22) Anmeldetag: **13.12.80**

(60) Veröffentlichungsnummer der früheren Anmeldung
nach Art. 76 EPÜ: **0034662**

(54) Verfahren zum Steuern der Bandspannung beim Wickeln von Kondensatoren.

(30) Priorität: **20.02.80 DE 3006247**

(43) Veröffentlichungstag der Anmeldung:
**15.01.86 Patentblatt 86/3**

(45) Bekanntmachung des Hinweises auf die Patenterteilung:
**30.03.88 Patentblatt 88/13**

(84) Benannte Vertragsstaaten:
**CH FR GB IT LI NL**

(56) Entgegenhaltungen:
**DE - C - 351 150**
**GB - A - 810 959**
**GB - A - 925 618**
**LU - A - 60 367**
**US - A - 3 471 098**
**US - A - 3 473 750**

(73) Patentinhaber: **Westermann, Wolfgang,**
**Schellingstrasse 7, D-6800 Mannheim 1 (DE)**

(72) Erfinder: **Westermann, Wolfgang, Schellingstrasse 7,**
**D-6800 Mannheim 1 (DE)**

(74) Vertreter: **Altenburg, Udo, Dipl.-Phys. et al, Patent- und**
**Rechtsanwälte Bardehle-Pagenberg-Dost-Altenburg &**
**Partner Postfach 86 06 20, D-8000 München 86 (DE)**

**Beschreibung**

Die Erfindung betrifft ein Verfahren zum Steuern der Bandspannung beim Wickeln von Kondensatoren gemäss Oberbegriff des Anspruchs 1, wie es z.B. aus der US-A-3 473 750 bekannt ist.

Bei der Verarbeitung von metallisierten Kunststoffbändern, insbesondere von Folien dünnster Stärken zwischen 1,5 und 2,5 µm, ergeben sich erhebliche Probleme durch die herabgesetzte Festigkeit. Es kann infolge ungenügend feinfühliger Regelung der Bandspannungen, z.B. durch Reibung oder Bremsung der Vorratsrollen, zu einer Überdehnung oder sogar zum Abriss der Bänder kommen.

Die Aufgabe der vorliegenden Erfindung besteht darin, diese Probleme der bekannten Wickelverfahren zu vermeiden und ein einfaches Verfahren der eingangs genannten Art zu schaffen, bei welchem eine Überdehnung der Bänder und eine kritische Verteilung der Lagenspannung im Wickel verhindert wird.

Diese Aufgabe wird bei einem Verfahren der eingangs genannten Art gemäss der Erfindung durch die Merkmale des kennzeichnenden Teils des Anspruchs 1 gelöst. Durch das erfindungsgemässe intermittierende und blockierungsfreie Bremsen der Vorratsrolle wird ein verdehnungs- und abrissfreies Wickeln von Dünnstfolien in zuverlässiger Weise gewährleistet.

Vorteilhafte Weiterbildungen des erfindungsgemässen Verfahrens, bei welchen die Oszillation der Bandspannung durch einen Wickeldorn erzeugt wird, deren beide senkrecht aufeinanderstehende Hauptachsen des Dornquerschnitts verschieden lang sind, sind in den Unteransprüchen angeführt. Aus der DE-A-351 150 sind einteilige und aus der GB-A-810 959 sind zweiteilige Dorne bekannt, deren beide senkrecht aufeinanderstehende Hauptachsen des Dornquerschnitts verschieden lang sind und bei denen mindestens eine der beiden Hauptachsen des Dornquerschnitts eine Symmetrieachse des Dornquerschnitts ist.

Im nachfolgenden werden Ausführungsbeispiele der Erfindung in Verbindung mit den Zeichnungen erläutert. Darin zeigt:

Fig. 1 eine schematische Darstellung einer Wickeleinrichtung mit federnder Hebelbremse und einem Dorn zur erfindungsgemässen Regelung der Bandspannung und

Fig. 2 verschiedene schematische Querschnitte anderer Ausführungsformen des Dorns mit den entsprechenden oszillierenden Funktionen der Bandspannung.

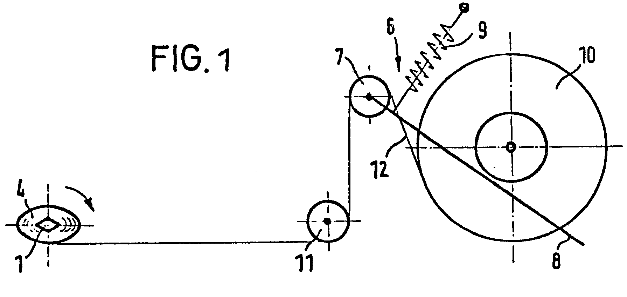

In Fig. 1 ist schematisch eine Wickeleinrichtung mit einer federnden Hebelbremse 6 und einem abgeflachten Wickeldorn 1 zur Regelung der Bandspannung gezeigt. Die Hebelbremse 6 besteht aus einer Rolle 7, einem Hebel 8 und einer an diesem Hebel befestigten Feder 9. Darüber hinaus ist eine Vorratsrolle 10 und eine Umlenkrolle 11 vorgesehen.

Ein Wickelband 12 läuft von der Vorratsrolle 10 über die Rolle 7 der federnden Hebelbremse 6 und die Umlenkrolle 11 zum Wickeldorn 1. Erhöht sich die Bandspannung, die von den Änderungen der Bandgeschwindigkeiten und somit vom Übersetzungsverhältnis zwischen Kondensatorwickel 4 und Vorratsrolle 10 abhängig ist, über den gewünschten Sollwert, so wird die Hebelbremse 6 gelüftet und die Vorratsrolle 10 kann schneller laufen, wodurch die Bandspannung herabgesetzt wird. Sinkt die Bandspannung unter den Sollwert, so wird der Bremshebel 8 durch die Feder 9 an die Vorratsrolle 10 herangezogen und durch Reibung der Bandspannung erhöht.

Bei bekannten Wickeldornen mit kreisförmigem oder quadratischem Querschnitt neigt dieser Regelkreis, wenn Folienbänder mit geringer mechanischer Festigkeit verarbeitet werden, zur Instabilität, da ein gewisser «Gummibandeffekt» der Folie in die Regelgrösse eingeht.

Wird dieser Regelkreis jedoch mit einem Wickeldorn kombiniert, dessen beide senkrecht aufeinanderstehenden Hauptachsen des Dornquerschnitts verschieden lang sind, so ist der Bandspannung eine durch die abgeflachte Form des Dorns — hervorgerufen durch den periodischen Wechsel der Übersetzungsverhältnisse — gesteuerte Oszillation überlagert. Diese Oszillation bewirkt eine intermittierende Reibung und dadurch ein intermittierendes, blockierungsfreies Bremsen und somit bei Dünnstfolien zwischen 2,5 und 1,5 µm ein verdehnungs- bzw. abrissfreies Wickeln.

Die oszillierende Funktion verhindert auch eine Verdehnung sehr dünner Folien, wenn statt Umlenkrollen Gleitschienen (nicht gezeigt) zur Führung der Bänder verwendet werden. Durch Verdrängung der Luft zwischen den glatten Oberflächen der Folie und des Führungselements kommt es zu verstärkter Haftreibung. Die oszillierende Funktion löst die Reibung periodisch, so dass sich wieder ein dünnes, reibungsminderndes Luftpolster zwischen den Oberflächen aufbauen kann.

Das Prinzip eines Regelkreises mit überlagerter oszillierender Funktion kann auch unabhängig von der Ausgestaltung des Wickeldorns mit anderen Mitteln, z.B. elektronischen, verwirklicht werden. Die Erhöhung der Empfindlichkeit des Regelkreises mit rein mechanischen Mitteln stellt jedoch eine wirtschaftlichere Lösung dar.

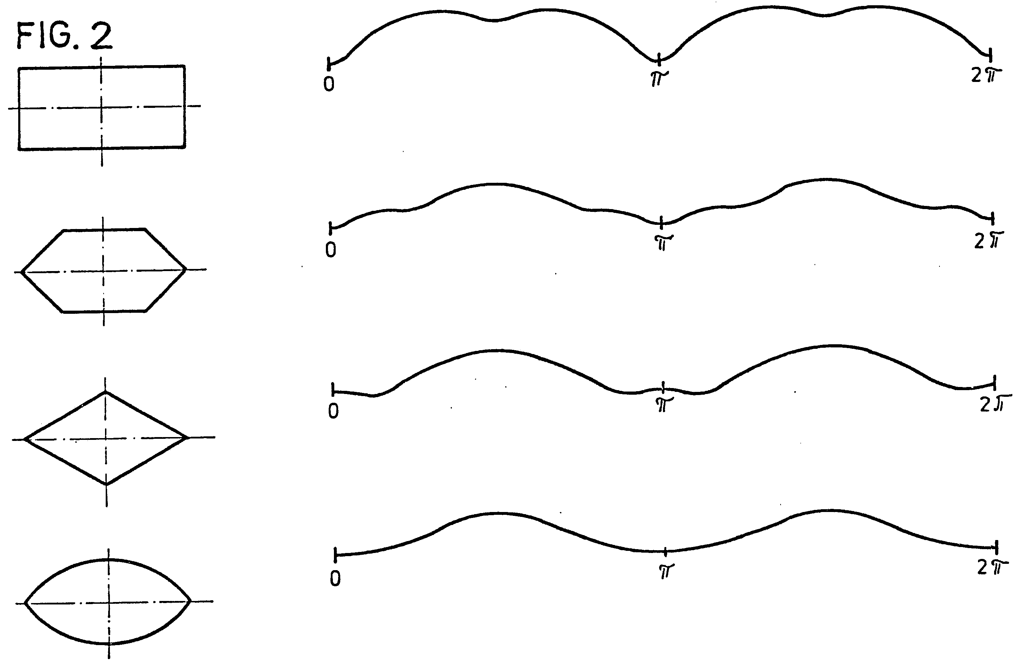

In Fig. 2 sind beispielhaft Wickeldornhälften mit rechteckigem, trapezförmigem, dreieckigem und kreissegmentförmigem Querschnitt gezeigt. Es sind auch andere Querschnitte möglich, wobei die Wickeldornhälften zueinander symmetrisch oder aus verschiedenen Querschnittsformen zusammengesetzt sein können. Darüber hinaus sind die oszillierenden Funktionen der Bandspannung, welche von diesen Wickeldornen erzeugt werden, dargestellt. Die Kurven beziehen sich auf symmetrische Dorne mit einem Hauptachsenverhältnis von 2 : 1.

Aus den Kurven lässt sich ablesen, dass die oszillierenden Funktionen von Rechteck-, Trapez- und Dreieckswickeldornen einen gewissen Oberwellenanteil besitzen, während die des Kreissegmentdorns (und des ähnlichen elliptischen Dorns) am meisten der reinen Sinusfunktion angenähert ist.

Hervorgerufen wird die oszillierende Funktion, die der Regelung der Bandspannung während des Wickelvorgangs überlagert ist, durch den Wechsel der beim Wickeln wirksamen Wickeldorndurchmesser, d.h. durch eine periodische Änderung des Übersetzungsverhältnisses zwischen Wickeldorn bzw. Kondensatorwickel und Vorratsrolle.

Die Ausbildung der Oszillationskurve, d.h. Verlauf und Amplitudenverhältnis, wird durch Form und Masse des Wickeldornquerschnitts bestimmt. Die Periodizität ergibt sich aus der Drehzahl des Wickeldorns pro Zeiteinheit.

Die Untersuchungen der verschiedenen Kurvenformen sowie praktische Erfahrungen haben ergeben, dass bezogen auf die Aufgabe der oszillierenden Funktion als auch auf die Aufgabe einer optimalen Verformung für ein faltenfreies Glätten symmetrische Dorne mit kreissegment- oder halbellipsenförmigen Wickeldornhälften am besten geeignet sind.

Für den Bereich der Verarbeitung von Dünnstfolien, insbesondere zur Herstellung von metallisierten Miniaturkondensatoren, hat sich zusätzlich ein Verhältnis der senkrecht aufeinanderstehenden Hauptachsen a-a' und b-b' des Dornquerschnitts von 2 : 1 als optimal erwiesen.

**Patentansprüche**

1. Verfahren zum Steuern der Bandspannung beim Wickeln von Kondensatoren mit dünnen, insbesondere 1,5 bis 2,5 µm dicken, metallisierten Kunststoffbändern, bei dem jeweils die mechanische, in Bandrichtung verlaufende Spannung eines sich von einer Vorratsrolle zu einem Wickeldorn bewegenden Kondensatorbands durch ein in Abhängigkeit von der Bandspannung erfolgendes Bremsen der Drehung der Vorratsrolle mittels einer Hebelbremse, die von einer Feder in Bremsrichtung gezogen wird und die bei Erhöhung der Spannung des sich bewegenden Bands über ein mit dem Band in Kontakt stehendes Teil gelüftet wird, geregelt wird, dadurch gekennzeichnet, dass der geregelten Bandspannung eine Oszillation überlagert wird, durch die das Bremsen der Vorratsrolle (10) intermittierend und blockierungsfrei erfolgt.

2. Verfahren nach Anspruch 1, dadurch gekennzeichnet, dass die Oszillation der Bandspannung durch einen Wickeldorn (1) erzeugt wird, dessen beide senkrecht aufeinanderstehenden Hauptachsen des Dornquerschnitts verschieden lang sind.

3. Verfahren nach Anspruch 2, dadurch gekennzeichnet, dass ein Wickeldorn (1) verwendet wird, bei dem mindestens eine der beiden Hauptachsen des Dornquerschnitts eine Symmetrieachse des Dornquerschnitts ist.

4. Verfahren nach Anspruch 3, dadurch gekennzeichnet, dass der verwendete Wickeldorn (1) aus zwei identischen Teilen besteht.

5. Verfahren nach Anspruch 3 oder 4, dadurch gekennzeichnet, dass der verwendete Wickeldorn (1) aus kreissegment- oder halbellipsenförmigen Hälften zusammengesetzt ist.

6. Verfahren nach einem der Ansprüche 3 bis 5, dadurch gekennzeichnet, dass das Längenverhältnis der Hauptachsen des verwendeten Wickeldorns (1) 2 : 1 ist.

**Claims**

1. A process for controlling tape tension during winding of capacitors with thin, in particular of 1.5 to 2.5 µm thickness, metallized synthetic plastics tapes, in which at times the mechanical tension in the tape running direction directed from a supply roll to a winding mandrel is controlled via a control dependent on the tape tension causing braking of the rotation of the supply roll by means of a lever brake, which is pulled by a spring in the braking direction and wich on increase of tension of the moving tape is released by a part in contact with a tape characterized in that the controlled tension has a superimposed oscillation that results in the intermittent application and release of the braking of the supply roll (10).

2. A process according to Claim 1, characterized in that the oscillations in the tape tension are brought about by a winding mandrel (1), whose two at right angles to each other main axes of the mandrel cross section are of different lengths.

3. A process according to Claim 2, characterized in that a winding mandrel (1) is used, in which a least one of the two main axes of the mandrel cross-section is a symmetrical axis of the cross-section.

4. A process according to Claim 3, characterized in that the employed winding mandrel (1) is composed of two identical parts.

5. A process according to Claim 3 or 4, characterized in that the empolyed winding mandrel (1) is constructed from rectangular- or half ellipse forming halves.

6. A process according to one of Claims 3 to 5, characterized in that the length ratio of the main axes of the employed winding mandrel (1) is 2 : 1.

**Revendications**

1. Procédé pour commander la tension de la bande lors de l'enroulement de condensateurs possédant des bandes en matière plastique métallisées minces, possédant une épaisseur comprise entre 1,5 et 2,5 µm, et selon lequel la tension mécanique, qui est appliquée dans la direction de la bande, d'une bande d'un condensateur se déplaçant depuis un rouleau débiteur en direction d'un mandrin d'enroulement est réglée par un freinage, exécuté en fonction de la tension de la bande, du mouvement de rotation du rouleau débiteur à l'aide d'un frein à levier, qui est attiré par un ressort dans la direction de freinage et est desserré, lors d'un accroissement de la tension de la bande en déplacement, par l'intermédiaire d'un organe placé en contact avec la bande, caractérisé en ce qu'à la tension réglée de la bande est superposée une oscillation permettant le freinage intermittent et sans blocage du rouleau débiteur (10).

2. Procédé selon la revendication 1, caractérisé en ce que l'oscillation de la tension de la bande est produite par un mandrin d'enroulement (1), dont les axes principaux, réciproquement perpendiculaires, de la section transversale possèdent des longueurs différentes.

3. Procédé selon la revendication 2, caractérisé en ce qu'on utilise un mandrin d'enroulement (1), dans lequel au moins l'un des deux axes principaux de la section transversale du mandrin est un axe de symétrie de cette section transversale.

4. Procédé selon la revendication 3, caractérisé en ce que le mandrin d'enroulement (1) utilisé est formé de deux éléments identiques.

5. Procédé selon la revendication 3 ou 4, caractérisé en ce que le mandrin d'enroulement (1) utilisé est formé par la réunion de moitiés en forme de segments circulaires ou en forme de demi-ellipses.

6. Procédé selon l'une des revendications 3 à 5, caractérisé en ce que le rapport des longueurs des axes principaux du mandrin d'enroulement (1) utilisé est égal à 2 : 1.

FIG. 1

FIG. 2